# EUROPÄISCHE PATENTSCHRIFT

(11) **EP 0 498 929 B1**
(45) Veröffentlichungstag und Bekanntmachung des Hinweises auf die Patenterteilung: **10.01.1996**
(21) Anmeldenummer: 91118377.0
(22) Anmeldetag: 29.10.1991
(51) Int. Cl.: B25B 27/00

(54) **Montagewerkzeug für Lippendichtungsringe**
Mounting tool for lip seals
Outil de montage pour bagues d'étanchéité à lèvres

(30) Priorität: 09.02.1991 DE 4104031
(43) Veröffentlichungstag der Anmeldung: 19.08.1992
(73) Patentinhaber: CR Elastomere GmbH, D-51379 Leverkusen-Opladen (DE)
(72) Erfinder: Jung, Norbert, Dipl.-Ing., W-5000 Köln 41 (DE)

(56) Entgegenhaltungen:
- BE-A- 688 953
- GB-A- 2 186 038
- US-A- 2 759 255
- US-A- 3 866 299
- US-A- 4 218 813

## Beschreibung

Die Erfindung betrifft ein Montagewerkzeug für Lippendichtungsringe, insbesondere Radialwellendichtringe, mit einer in den Dichtlippenbereich einschiebbaren Hülse, die die Dichtlippe radial aufweitet, und die axial zusammen mit der Dichtung auf das abzudichtende Wellenende aufschiebbar ist, wobei die Hülse radial spreizbar ist.

Bei der Montage von gattungsgemäßen Dichtungsringen kommt es immer wieder zu Beschädigungen der Dichtringe, da häufig nicht die geeigneten Montagemittel zur Verfügung stehen. Um den Dichtungsring, d. h. insbesondere die Dichtlippe, nicht zu beschädigen, hat man bisher Montagehülsen verwendet, die ebenfalls als Transportschutz dienten.

Aus der DE-AS 23 40 275 ist eine solche Transport- und Montagehülse zu entnehmen. Die Hülse ist axial in den Wellendichtring einsteckbar, dabei wird der Wellendichtring radial aufgeweitet und liegt dann unter radialer Spannung auf der Hülse auf. Die Hülse ist dem Durchmesser der abzudichtenden Welle angepaßt, so daß die Hülse auf die Welle aufschiebbar ist. Bei der Montage des Wellendichtringes wird die Hülse auf die Welle aufgesetzt und anschließend der Wellendichtring mit einem an der Stirnfläche des Wellendichtringes angreifenden Preßwerkzeug von der Hülse heruntergeschoben. Dabei gleitet die Dichtlippe über die Hülse und über die abzudichtende Welle, bis die vorgeschriebene Einbaulage erreicht ist. Anschließend wird die Hülse von der Welle abgezogen. Der Nachteil dieser Vorrichtung ist darin zu sehen, daß der Dichtungsring durch die Hülse eine übermäßige Aufweitung der Dichtlippenkante erfährt, so daß im eingebauten Zustand die Dichtkante nicht mehr mit der vorgesehenen Radialkraft an der Welle anliegt. Darüber hinaus ist es mit den vorbekannten Montagehülsen nicht möglich, den Dichtungsring so auf die Welle abzulegen, daß eine Relativbewegung zwischen Dichtkante und Hülse beziehungsweise Dichtkante und Welle auftritt. Hierdurch kann beim Gleiten über die Welle die Dichtkante beschädigt werden.

Die US-A-4 218 813 zeigt ein Montagewerkzeug für Lippendichtungsringe, insbesondere Radialwellendichtringe, mit einer in den Dichtlippenbereich einschiebbaren Hülse, die die Dichtlippe radial aufweitet und die axial zusammen mit der Dichtung auf das abzudichtende Wellenende aufschiebbar ist, wobei die Hülse radial spreizbar ist. Bei dieser bekannten Ausführung wird die Hülse durch das Einführen der Welle gespreizt.

Der Erfindung liegt die Aufgabe zugrunde, ein Montagewerkzeug für Lippendichtungsringe zu schaffen, mit dem Beschädigungen im Dichtkantenbereich bei der Montage von gattungsgemäßen Dichtungsringen vermieden werden.

Die Aufgabe wird erfindungsgemäß dadurch gelöst, daß die Hülse aus einer elastisch verformbaren Ringscheibe besteht, die konzentrisch am Endbereich eines zylindrischen Rohrkörpers angeordnet ist, wobei die Ringscheibe sich radial in den Rohrkörper erstreckt, und wobei im Rohrkörper ein axial verschiebbarer Kolben angeordnet ist, derart, daß der Kolben mit einer Stirnfläche axial gegen die innere Ringscheibenstirnfläche preßbar ist, so daß die Ringscheibe axial nach außen abwinkelbar ist.

Auf diese Weise ist es nunmehr möglich, die elastisch verformbare Ringscheibe, die konzentrisch am Endbereich eines zylindrischen Rohrkörpers angeordnet ist und sich radial in den Rohrkörper hinein erstreckt, zunächst ohne Berührung der Dichtkante in den Dichtkantenbereich einzuschieben. Nachdem die genaue Lage der Ringscheibe festliegt, wird durch radiales Spreizen der Ringscheibe durch den im Rohrkörper angeordneten axial verschiebbaren Kolben, der mit einer Stirnfläche axial gegen die innere Ringscheibenstirnfläche preßbar ist, die Ringscheibe axial nach außen abgewinkelt und dabei die Lippendichtung radial aufgeweitet, ohne daß die Dichtkante auf der Hülsenoberfläche axial bewegt wird. Somit ist eine Beschädigung der Dichtkante beim Einstecken der Ringscheibe in den Dichtbereich ausgeschlossen.

Einem weiteren Gedanken der Erfindung gemäß besteht die Ringscheibe aus elastomerem Werkstoff.

Um den Lippendichtungsring sicher auf der Hülse beziehungsweise Ringscheibe zu halten und zu zentrieren ist es vorteilhaft, eine Ringscheibe zu verwenden, deren axiale Dicke kleiner als 3 mm ist und deren abgewinkelter Ringscheibenteil eine axiale Länge aufweist, die etwa der axialen Breite des Lippendichtungsringes entspricht.

Der Kolben des Montagewerkzeuges ist axial aus dem Rohrkörper herausschiebbar, so daß mindestens ein Teil seiner Umfangsfläche als Stutzfläche des abgewinkelten Ringscheibenteils fungiert. Hierdurch bildet die relativ dünne, labile Ringscheibe eine formsteife Hülse, die fest im Dichtbereich des Dichtungsringes angeordnet ist.

Alternativ kann einem weiteren Gedanken der Erfindung gemäß die Hülse ein konisches Rohr sein, bei dem durch axial verlaufende Einschnitte Spreizsegmente gebildet sind, wobei das Rohr durch einen axial eintauchbaren Dorn radial spreizbar ist. Der Dorn weist einen Durchmesser auf, der etwa dem Durchmesser der abzudichtenden Welle entspricht.

Um in Umfangsrichtung gesehen eine geschlosse Ringfläche ohne schädliche Kanten zu haben, ist es vorteilhaft, die Spreizsegmente beziehungsweise das Rohr mit einer elastomeren Schutzhülle zu umgeben.

Nach einem weiteren Merkmal der Erfindung ist das Montagewerkzeug so ausgelegt, daß das Ringscheibenteil und die Spreizsegmente den Wellendichtring axial neben der Dichtkante im Dichtlippen bildenden Membranteil radial abstützen. Auf diese Weise ist die eigentliche Dichtkante während des Einbauvorganges des Dichtungsringes mit radialem Spalt über die abzudichtende Welle verschiebbar. Da der Kolben einen Durchmesser aufweist, der etwa dem Durchmesser der abzudichtenden Welle entspricht, kann auf einfache Weise der Dichtungsring auf die Welle geschoben werden, ohne daß die Ringscheibe in radialer Richtung ihre Stabilität verliert. Beim Zurückziehen des Kolbens aus dem abgewinkelten Ringscheibenteil übernimmt automatisch die Welle die radiale Stützfunktion des Kolbens.

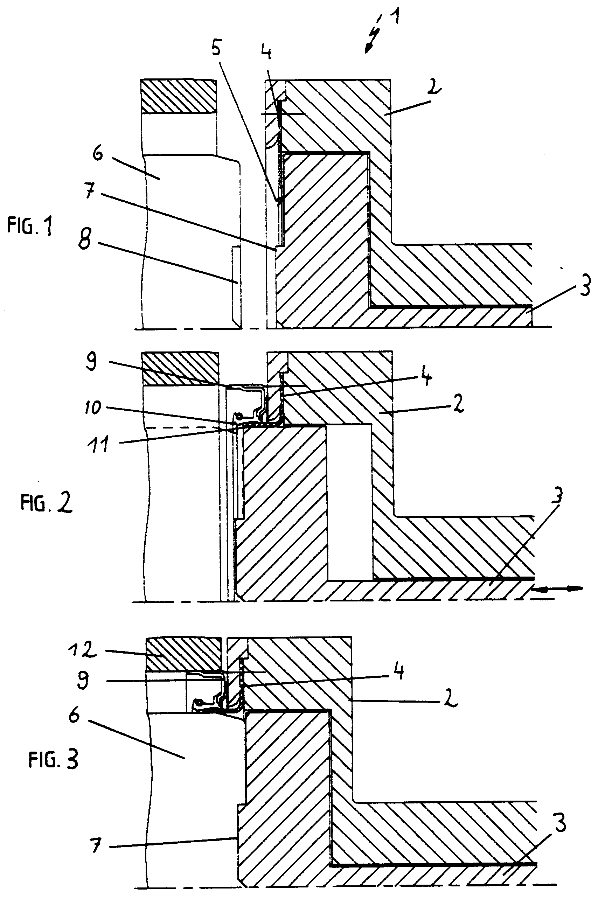

Die Erfindung ist in der Zeichnung dargestellt und wird im folgenden näher erläutert. Es zeigen:
Figur 1 Montagewerkezug für Radialwellendichtringe
Figur 2 Montagewerkzeug mit aufgesetztem Radialwellendichtring
Figur 3 Montagewerkzeug nach dem Absetzen des Radialwellendichtringes
Figur 4 Alternatives Montagewerkzeug mit aufgesetztem Radialwellendichtring
Figur 5 Montagewerkzeug gemäß Figur 4 mit gespreizter Hülse
Das in der Figur 1 dargestellte Montagewerkzeug (1) besteht aus einem zylindrischen Rohrkörper (2), in dem ein axial verschiebbarer Kolben (3) angeordnet ist sowie einer am Endbereich des Rohrkörpers (2) befestigten Hülse in Form einer elastomeren Ringscheibe (4). Der Kolben (3) ist so angeordnet, daß er mit einer Stirnfläche (5) axial gegen die innere Stirnfläche der Ringscheibe (4) pressbar ist. Zur Zentrierung des Montagewerkzeuges gegenüber der abzudichtenden Welle (6) weist der Kolben (3) einen axial Vorsprung (7) auf, der in eine korrespondierende Nut (8) der Welle (6) eingreift.

Zur Aufnahme des einzubauenden Wellendichtringes (9) - Figur 2 - wird zunächst der Rohrkörper axial in Kontakt mit der Rückenfläche des Wellendichtringes (9) gebracht, sodann fährt der Kolben (3) axial aus dem Rohrkörper (2) heraus und winkelt dabei die elastomere Ringscheibe (4) ab, d.h. die Ringscheibe (4) wird radial in den Dichtbereich des Wellendichtringes (9) gepreßt. Der die Ringscheibe (4) radial abstützende Kolben (3) zentriert gleichzeitig den Wellendichtring (9). Da der Kolbendurchmesser etwa dem Durchmesser der abzudichtenden Welle (6) entspricht, und die elastomere Ringscheibe (4) axial sehr dünn ausgebildet ist, wird der Radialwellendichtring (9) radial gespreizt, und zwar so weit, daß beim Aufschieben des Wellendichtringes (9) auf die Welle (6) zwischen der Dichtkante (10) des Wellendichtringes (9) und der Wellenoberfläche ein minimaler Spalt verbleibt. Die axiale Dicke der Ringscheibe (4) ist so ausgelegt, daß der Radialwellendichtring (9) radial keine Bewegung ausführen kann. Je nach Wellendichtringtyp eignet sich eine Ringscheibendicke zwischen 0,5 und 3 mm. Auf diese Weise kann auf zusätzliche Zentriermittel während der Montage verzichtet werden. Das Montagewerkzeug selbst dient als Zentriermittel. Darüber hinaus ist der abgewinkelte Ringscheibenteil (11) in der Länge so ausgelegt, daß der Wellendichtring (9) nicht unmittelbar an der Dichtkante (10) berührt wird. Auf diese Weise hat die Dichtkante (10) keinen Kontakt mit dem Montagewerkzeug (1) als auch mit der Wellenoberfläche. Beschädigungen der Dichtkante (10) sind somit ausgeschlossen.

Zum Einbau des Wellendichtringe (9) - Figur 3 - greift der Kolben mit der Zentrierung (7) in die korrespondierende Wellennut (8). Mit Hilfe des zylindrischen Rohrkörpers (2) wird der Wellendichtring (9) in das Aufnahmegehäuse (12) gepreßt. Die radiale Abstützung der Ringscheibe (4) wird vom Kolben (3) unmittelbar auf die Welle (6) übertragen. Beim Erreichen der Einbaulage wird das Montagewerkezug (1) axial zurückgezogen. Durch die aus dem Dichtbereich des Wellendichtringes (9) herausrutschende Ringscheibe (4) wird die Dichtkante (10) radial auf die Welle (6) abgesetzt. Das Werkzeug nimmt nun wieder die Position gemäß Figur 1 ein und steht für den Einbau des nächsten Wellendichtringes zur Verfügung.

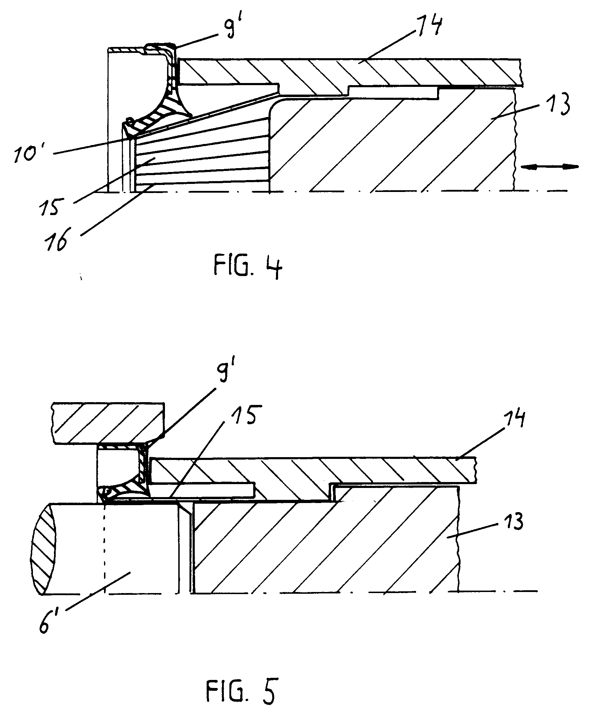

In den Figuren 4 und 5 ist eine alternative Konstruktion dargestellt. Das Montagewerkzeug besteht im wesentlichen aus einem Dorn (13), der in einem Zylinder (14) axial beweglich geführt ist. Am Innenumfang des Zylinders (14) ist eine Hülse (15) durch ein konisches Rohr gebildet. Durch axial verlaufende Einschnitte (16) werden Spreizsegmente gebildet, die gegebenenfalls von einer elastomeren Schutzhülle umgeben sein können (nicht gezeichnet). Die Hülse (15) kann aus Metall oder Kunststoff gebildet sein. Die Spreizsegmente ragen axial aus dem Zylinder (14) heraus, derart, daß beim Einschieben der Hülse (15) in den Wellendichtring (9') die Hülse (15) lediglich bis kurz vor die Dichtkante (10') einschiebbar ist. Beim Einschieben des Dornes (13) in die konische Hülse (15) - Figur 5 - wird die Hülse (15) gespreizt und der Wellendichtring (9') kann über die Welle (6') in die gewünschte Einbaulage geschoben werden. Die Dichtkante (10') berührt weder die Hülse (15) noch die Welle (6') beim Einbau, so daß kein Beschädigung auftreten kann. Nach Erreichen der Einbauposition wird der Dorn (13) zurückgezogen, wodurch die Dichtkante (10') radial auf die Welle sich absenkt.

## Patentansprüche

1. Montagewerkzeug (1) für Lippendichtungsringe, insbesondere Radialwellendichtringe (9), mit einer in den Dichtlippenbereich einschiebbaren Hülse (4), die die Dichtlippe (10) radial aufweitet, und die axial zusammen mit der Dichtung auf das abzudichtende Wellenende (6) aufschiebbar ist, wobei die Hülse radial spreizbar ist, dadurch gekennzeichnet, daß die Hülse (4) aus einer elastisch verformbaren Ringscheibe (4) besteht, die konzentrisch am Endbereich eines zylindrischen Rohrkörpers (2) angeordnet ist, wobei die Ringscheibe (4) sich radial in den Rohrkörper (2) erstreckt, und wobei im Rohrkörper (2) ein axial verschiebbarer Kolben (3) angeordnet ist, derart, daß der Kolben (3) mit einer Stirnfläche (5) axial gegen die innere Ringscheibenstirnfläche preßbar ist, so daß die Ringscheibe (4) axial nach außen abwinkelbar ist.

2. Montagewerkzeug nach Anspruch 1, dadurch gekennzeichnet, daß die Ringscheibe (4) aus elastomerem Werkstoff besteht.

3. Montagewerkzeug nach den Ansprüchen 1 und 2, dadurch gekennzeichnet, daß die Dicke der Ringscheibe (4) kleiner als 3 mm ist.

4. Montagewerkzeug nach den Ansprüchen 1 bis 3, dadurch gekennzeichnet, daß der nach außen abgewinkelte Ringscheibenteil (11) eine axiale Länge aufweist, die etwa der axialen Breite des Lippendichtungsringes (9) entspricht.

5. Montagewerkzeug nach den Ansprüchen 1 bis 4, dadurch gekennzeichnet, daß der Kolben (3) axial aus dem Rohrkörper (2) herausschiebbar ist, so daß mindestens ein Teil der Umfangsfläche des Kolbens (3) als radiale Stirnfläche des abgewinkelten Ringscheibenteiles (11) fungiert.

6. Montagewerkzeug (1) für Lippendichtungsringe, insbesondere Radialwellendichtringe (9), mit einer in den Dichtlippenbereich einschiebbaren Hülse (4), die die Dichtlippe (10) radial aufweitet, und die axial zusammen mit der Dichtung auf das abzudichtende Wellenende (6) aufschiebbar ist, wobei die Hülse radial spreizbar ist, dadurch gekennzeichnet, daß die Hülse ein konisches Rohr (15) ist, bei dem durch axial verlaufende Einschnitte (16) Spreizsegmente gebildet sind, wobei das Rohr (15) durch einen axial verschiebbaren Dorn (13) radial spreizbar ist.

7. Montagewerkzeug nach Anspruch 6, dadurch gekennzeichnet, daß das Rohr (15) mit einer elastomeren Schutzhülle umgeben ist.

8. Montagewerkzeug nach mindestens einem der Ansprüche 1 bis 7, dadurch gekennzeichnet, daß das Ringscheibenteil (11) und die Spreizsegmente den Wellendichtring (9, 9') axial neben der Dichtkante (10, 10') im Dichtlippen bildenden Membranteil radial abstützen.

## Claims

1. Fitting tool (1) for annular lip seals, more particularly annular radial shaft seals (9), with a sleeve (4) insertable into the lip seal area, which radially expands the lip seal (10), and which may be thrust axially together with the seal on to the end (6) of the shaft to be sealed, the said sleeve being radially expandable, characterised in that the sleeve (4) comprises an elastically deformable annular disc (4), which is disposed concentrically on the end region of a cylindrical tubular body (2), the annular disc (4) extending radially into the tubular body (2), and an axially displaceable piston (3) being disposed in the tubular body (2) in such a way that the piston (3) may be pressed with one end face (5) axially against the inner end face of the annular disc, so that the annular disc (4) may be bent axially outwards.

2. Fitting tool according to Claims 1, characterised in that the annular disc (4) comprises elastomeric material.

3. Fitting tool according to Claims 1 and 2, characterised in that the thickness of the annular disc (4) is less than 3 mm.

4. Fitting tool according to Claim 1 to 3, characterised in that the portion (11) of the annular disc which is bent-over outwards has an axial length which roughly corresponds to the axial width of the annular lip seal (9).

5. Fitting tool according to Claims 1 to 4, characterised in that the piston (3) may be pushed axially out of the tubular body (2), so that at least a portion of the peripheral surface of the piston (3) functions as a radial end face of the bent-over portion of the annular disc (11).

6. Fitting tool (1) for annular lip seals, more particularly annular radial shaft seals (9), with a sleeve (4) insertable into the lip seal area, which radially expands the lip seal (10), and which may be thrust axially together with the seal on to the end (6) of the shaft to be sealed, the said sleeve being radially expandable, characterised in that the sleeve is a conical tube (15) in which axially extending incisions (16) form expansion segments, the tube (15) being expandable radially by means of an axially displaceable mandrel (13).

7. Fitting tool according to Claim 6, characterised in that the tube (15) is surrounded by an elastomeric protective sleeve.

8. Fitting tool according to at least one of Claims 1 to 7, characterised in that the portion (11) of the annular disc and the expansion segments radially support the annular shaft seal (9, 9') next to the seal edge (10, 10') in the diaphragm portion forming lip seals.

## Revendications

1. Outil de montage (1) pour bagues d'étanchéité à lèvres, en particulier pour bagues d'étanchéité d'arbres radiales (9), avec une douille (4) insérable dans la zone de lèvres d'étanchéité, qui élargit radialement la lèvre d'étanchéité (10), et qui est emmanchable axialement avec la garniture d'étanchéité sur l'extrémité (6) d'arbre à étanchéifier, la douille pouvait être écartée radialement, caractérisé en ce que la douille (4) est réalisée en un disque annulaire (4) élastiquement déformable, qui est disposé de manière concentrique au niveau de la zone d'extrémité d'un corps tubulaire cylindrique (2), le disque annulaire (4) s'étendant radialement dans le corps tubulaire (2), et un piston (3) pouvant coulisser axialement (3) étant disposé dans le corps tubulaire (2) de telle sorte que le piston (3) avec une surface frontale (5) peut être pressé axialement contre la surface frontale intérieure du disque annulaire, de telle sorte que le disque annulaire (4) peut être coudé axialement vers l'extérieur.

2. Outil de montage selon la revendication 1, caractérisé en ce que le disque annulaire (4) est constitué en matériau élastomère.

3. Outil de montage selon les revendications 1 et 2, caractérisé en ce que l'épaisseur du disque annulaire (4) est inférieur à 3 mm.

4. Outil de montage selon les revendications 1 à 3, caractérisé en ce que la partie (11) du disque annulaire coudée vers l'extérieur présente une longueur axiale, qui correspond environ à la largeur axiale de la bague d'étanchéité à lévres (9).

5. Outil de montage selon les revendications 1 à 4, caractérisé en ce que le piston (3) peut être poussé axialement hors du corps tubulaire (2) de telle sorte qu'au moins une partie de la surface périphérie du piston (3) fait fonction de surface frontale radiale de la partie coudée (11) du disque annulaire.

6. Outil de montage (1) pour bagues d'étanchéité à lévres, en particulier pour bagues d'étanchéité d'arbres radiale (9), avec une douille (4) insérable dans la zone de lèvres d'étanchéité, qui élargit radialement la lèvre d'étanchéité (10), et qui est emmanchable axialement avec la garniture d'étanchéité sur l'extrémité (6) d'arbre à étanchéifier, la douille pouvant être écartée radialement, caractérisé en ce que la douille est un tube conique (15) sur lequel sont formés des segments d'écartement par des entailles (16) s'étendant axialement, le tube (15) pouvant être écarté radialement par un mandrin (13) coulissant axialement.

7. Outil de montage selon la revendication 6, caractérisé en ce que le tube (15) est entouré par une douille de protection en élastomère.

8. Outil de montage selon l'une au moins des revendications 1 à 7, caractérisé en ce que la partie (11) de disque annulaire et les segments d'écartement supportent radialement la bague d'étanchéité d'arbre (9, 9') axialement à côté de l'arête d'étanchéité (10, 10') dans la partie de membrane formant lèvre d'étanchéité.
